# EUROPÄISCHE PATENTANMELDUNG

(11) **EP 3 805 648 A1**
(43) Veröffentlichungstag der Anmeldung: **14.04.2021**
(21) Anmeldenummer: 20198289.9
(22) Anmeldetag: 25.09.2020
(51) Int. Cl.: F24C 15/32, A47J 27/04

(54) **VERDAMPFERSYSTEM FÜR EIN HAUSHALTSGERÄT SOWIE HAUSHALTSGERÄT**

(30) Priorität: 07.10.2019 DE 102019215339
(71) Anmelder: BSH Hausgeräte GmbH, 81739 München (DE)
(72) Erfinder: Kroehl, Hannah Milena, 71665 Vaihingen/Enz (DE); Ball, Ludovic, 67770 Sessenheim (FR)

(57) **Zusammenfassung**

Ein Verdampfersystem (3) für ein Haushaltsgerät (1) weist einen Tank (4) zur Bevorratung von Flüssigkeit (W), einen Verdampfer (7) mit einem mit der Flüssigkeit befüllbaren Verdampferhohlraum (8), mindestens einem Heizelement (9) zum Verdampfen der in dem Verdampferhohlraum befindlichen Flüssigkeit, einem Flüssigkeitseinlass (10) zum Einführen der zu verdampfenden Flüssigkeit aus dem Tank in den Verdampferhohlraum und einer Dampfaustrittsöffnung (11) zum Auslassen von Dampf aus dem Verdampferhohlraum und einen oberhalb des Verdampfers (7) angeordneten Abscheider (14) mit einem Abscheiderhohlraum (15), einer mit der Dampfaustrittsöffnung des Verdampfers (7) verbundenen Dampfeinlassöffnung (16) und einer Dampfauslassöffnung (17) zum Auslassen von Dampf aus dem Abscheiderhohlraum auf, wobei der Abscheider (14) so geformt und angeordnet ist, dass darin befindliche Flüssigkeit (W) durch seine Dampfeinlassöffnung (16) und durch die Dampfaustrittsöffnung des Verdampfers in den Verdampferhohlraum (8) abfließt. Ein Haushalts-Gargerät (1) weist das Verdampfersystem (3) auf. Die Erfindung ist besonders vorteilhaft anwendbar auf Haushalts-Gargeräte, insbesondere Backöfen mit Dampfbehandlungsfunktionalität.

## Beschreibung

Die Erfindung betrifft ein Verdampfersystem für ein Haushaltsgerät, aufweisend einen Tank zur Bevorratung von Flüssigkeit, einen Verdampfer mit einem mit Flüssigkeit befüllbaren Verdampferhohlraum, mindestens einem Heizelement zum Verdampfen der in dem Verdampferhohlraum befindlichen Flüssigkeit, einem Flüssigkeitseinlass zum Einführen der zu verdampfenden Flüssigkeit aus dem Tank in den Verdampferhohlraum und einer Dampfaustrittsöffnung zum Auslassen von Dampf aus dem Verdampferhohlraum und aufweisend einen Abscheider mit einem Abscheiderhohlraum, einer mit der Dampfaustrittsöffnung des Verdampfers verbundenen Dampfeinlassöffnung und einer Dampfauslassöffnung zum Auslassen von Dampf aus dem Abscheiderhohlraum. Die Erfindung betrifft auch ein mit dem Verdampfersystem ausgerüstetes Haushaltsgerät. Die Erfindung ist besonders vorteilhaft anwendbar auf Haushalts-Gargeräte, insbesondere Backöfen mit Dampfbehandlungsfunktionalität.

DE 10 2011 054 687 A1 offenbart ein Gargerät mit einer Verdampfungseinrichtung, Verdampfungseinrichtung und ein Verfahren zum Herstellen einer Verdampfungseinrichtung. Das Gargerät umfasst einen beheizbaren Garraum, eine den Garraum verschließenden Tür und einer Verdampfungseinrichtung. Die Verdampfungseinrichtung umfasst einen Verdampfungsbehälter und eine Heizeinrichtung. Der Verdampfungsbehälter wird aus wenigstens zwei Teilen gefertigt, die derart ausgebildet sind und miteinander verbunden werden, dass die Heizeinrichtung wenigstens teilweise zwischen den wenigstens zwei Teilen des Verdampfungsbehälters aufgenommen ist. Dazu wird die Heizeinrichtung bei der Herstellung der Verdampfungseinrichtung teilweise in ein erstes Teil des Verdampfungsbehälters eingelegt wird und mit einem zweiten Teil des Verdampfungsbehälters teilweise abgedeckt. Die zwei Teile des Verdampfungsbehälters werden anschließend durch einen die beiden Teile miteinander verbindenden Behandlungsvorgang fluiddicht verbunden.

DE 101 09 251 C1 offenbart einen Dampferzeuger, insbesondere für ein Gargerät, mit einem durch Kesselwände und einen Kesselboden begrenzten Kesselinnenraum zur Aufnahme von Wasser, einem Wasserzulauf zu dem Kesselinnenraum, einem Wasserablauf aus dem Kesselinnenraum, einer Heizeinrichtung zum Verdampfen von Wasser aus dem Kesselinnenraum und einem Dampfaustritt für das verdampfte Wasser, wobei die Kesselwände von außen beheizbar sind, die Kesselwände zum Kesselboden hin auseinander laufend ausgebildet sind, und der Kesselboden einen Pumpensumpf bildet.

US 2018014684 A1 offenbart ein Dampferzeugungssystem für ein Gargerät, umfassend ein Heizelement, das mit einem Heizrohr gekoppelt ist, wobei Wasser aus einem Wasserreservoir durch Schwerkraft in das Heizrohr eingespeist wird, um es durch das Heizelement zu erwärmen, um eine Mischung aus heißem Wasser und Dampf zu erzeugen. Eine erste Versorgungsleitung ist mit dem Heizrohr verbunden, um die Mischung zu einem Abscheider zu befördern, ohne dass bewegliche oder komplexe Pumpenteile erforderlich sind. Der Abscheider trennt Dampf und heißes Wasser. Eine zweite Zuleitung ist an einem ersten Ende mit dem Abscheider gekoppelt und mündet an einem zweiten Ende in den Garraum des Gargeräts. Die zweite Zuleitung ist dazu eingerichtet, am Abscheider abgeschiedenen Dampf über einen im Garraum angeordneten Dampfaustritt dem Garraum zuzuführen.

DE 10 2010 061 029 A1 offenbart ein Gargerät mit einer Verdampfungseinrichtung zum Bedampfen wenigstens eines Garraumes. Die Verdampfungseinrichtung umfasst eine Heizeinrichtung, eine Zufuhr für Flüssigkeiten und eine Abfuhr für Dampf. Dabei ist die Abfuhr dazu geeignet und ausgebildet den Dampf in den Garraum zu führen. Der Heizeinrichtung ist eine Auffangeinrichtung zugeordnet. Diese kann einen Reststoff, insbesondere Kalk, aufnehmen.

DE 10 2010 043 490 A1 offenbart ein Dampfgargerät, insbesondere für den Haushalt, mit einem Garraum, dem Dampf von einem Dampferzeuger über eine Dampfleitung zuführbar ist. Insbesondere zur Verringerung der Abgabe von Kondensattropfen in den Garraum wird vorgeschlagen in der Dampfleitung eine Fangeinrichtung für Kondensat anzuordnen, die vorzugsweise das Kondensat über einen Dampf-Zuleitungsabschnitt der Dampfleitung nach unten in Richtung Dampferzeuger abfließen oder abtropfen lässt. Gemäß einer weiteren oder ergänzenden Lösung ist der Durchflussquerschnitt des Dampf-Zuleitungsabschnitts so auf die abgegebenen Dampfmengen abgestimmt ist, dass die Dampfströmungsgeschwindigkeit langsam genug ist, um Kondensattropfen oder Rinnsale darin gegen die Dampfströmung abtropfen oder abfließen zu lassen.

EP 3 457 027 A2 offenbart einen Dampferzeuger für ein Dampfgargerät mit einem Garraum. Der Dampferzeuger weist Dampferzeugungsmittel, eine Wasserzufuhr zu den Dampferzeugungsmitteln, einen Zyklonabscheider für von den Dampferzeugungsmitteln erzeugten Dampf und einen Dampfauslass von dem Zyklonabscheider zu dem Garraum des Dampfgargeräts auf. Der Zyklonabscheider bildet mit den Dampferzeugungsmitteln eine integrierte Baueinheit mit einem direkten Eintritt von Dampf von den Dampferzeugungsmitteln in den Zyklonabscheider und mit einem direkten Austritt von abgeschiedenem Wasser aus dem Zyklonabscheider in die Dampferzeugungsmittel.

Es ist die **Aufgabe** der vorliegenden Erfindung, die Nachteile des Standes der Technik zumindest teilweise zu überwinden und insbesondere eine kompakte Möglichkeit für ein Haushaltsgerät bereitzustellen, eine schnelle und energiesparende Erzeugung von weitgehend tröpfchenfreiem Dampf bei langer Reichweite bereitzustellen.

Diese Aufgabe wird gemäß den Merkmalen der unabhängigen Ansprüche gelöst. Vorteilhafte Ausführungsformen sind Gegenstand der abhängigen Ansprüche, der Beschreibung und der Zeichnungen.

Die Aufgabe wird gelöst durch ein Verdampfersystem für ein Haushaltsgerät, aufweisend
- einen Tank zur Bevorratung von Flüssigkeit,
- einen Verdampfer mit einem mit einer Flüssigkeit befüllbaren Hohlraum ("Verdampferhohlraum"), mindestens einem Heizelement zum Verdampfen von in dem Verdampferhohlraum befindlicher Flüssigkeit, einem Flüssigkeitseinlass zum Einführen der zu verdampfenden Flüssigkeit in den Verdampferhohlraum aus dem Tank und einer Öffnung ("Dampfaustrittsöffnung") zum Auslassen von Dampf aus dem Verdampferhohlraum und
- einen oberhalb des Verdampfers angeordneten (Flüssigkeits- bzw. Tröpfchen-) Abscheider mit einem Hohlraum ("Abscheiderhohlraum"), einer mit der Dampfaustrittsöffnung des Verdampfers verbundenen Öffnung ("Dampfeinlassöffnung") und einer weiteren Öffnung zum Auslassen von Dampf aus dem Abscheiderhohlraum ("Dampfauslassöffnung"),
   wobei
- der Abscheider so geformt und angeordnet ist, dass darin befindliche Flüssigkeit durch seine Dampfeinlassöffnung abfließt.

Dieses Verdampfersystem ergibt den Vorteil, dass auf eine gesonderte Rücklaufleitung von dem Abscheider verzichtet wird und dadurch ein besonders kompakter und preiswerter Aufbau umsetzbar ist. Zudem ist die von dem Abscheider durch seine Dampfeinlassöffnung in den Verdampfer zurückfließende Flüssigkeit noch heiß, so dass Dampf besonders schnell erzeugt werden kann. Ferner wird im Vergleich zu dem Fall, dass die Flüssigkeit über eine gesonderte Rücklaufleitung in einen Tank rückgeführt wird, ein Energieverbrauch zum Sieden der Flüssigkeit in dem Verdampfer verringert, was auch eine Umsetzung einer langen Reichweite erleichtert. Dadurch, dass die heiße Flüssigkeit aus dem Abscheider zurück in den Verdampfer und nicht in den Tank fließt, kann außerdem eine praktisch beliebige Menge von Flüssigkeit in den Tank eingefüllt werden, ohne die Ankochzeit merklich zu erhöhen, was ebenfalls eine Umsetzung einer langen Reichweite erleichtert. Mittels des Abscheiders werden zudem aus dem Dampf mitgeführte oder mitgerissene Flüssigkeitströpfchen abgetrennt oder abgeschieden, so dass der aus dem Abscheider austretende Dampf besonders wenige Tröpfchen aufweist. Dadurch ist die Dampfqualität unabhängig von einem Pegelstand der Flüssigkeit in dem Verdampferhohlraum, was wiederum eine Bereitstellung eines pumpenlosen Verdampfersystems erleichtert, insbesondere auch eines Verdampfersystems ohne Füllstandserkennung und/oder ohne Leistungssteuerung des Verdampfers. Eine pumpenlose Anordnung wird außerdem dadurch unterstützt, dass sich der Abscheider geodätisch oberhalb des Verdampfers befindet, so dass die in dem Abscheider befindliche Flüssigkeit durch Schwerkraft in den Verdampferhohlraum abfließen kann.

Das Haushaltsgerät kann ein Haushalts-Gargerät mit einem Behandlungsraum, insbesondere Garraum, sein, wobei dann der Abscheider vorteilhafterweise über seine Dampfauslassöffnung mit einem Behandlungsraum des Haushalts-Gargeräts verbunden ist, z.B. über einen Kanal. Es ist eine Ausgestaltung, dass das Haushalts-Gargerät ein Backofen ist, der dann eine Dampfbehandlungsfunktionalität aufweist.

Der Verdampfer wird aus dem Tank mit Flüssigkeit versorgt. Die Flüssigkeit kann mittels einer Pumpe oder - vorteilhafterweise - pumpenlos durch Schwerkraft aus dem Tank in den Verdampferhohlraum fließen. Für die pumpenlose Variante ist es eine besonders vorteilhafte Ausgestaltung, dass der Flüssigkeitseinlass des Verdampfers mit dem Tank, der sich auf Höhe des Verdampfers befindet, nach Art kommunizierender Röhren verbunden ist. Der geodätische Pegel der Flüssigkeit in dem Tank entspricht dann dem geodätische Pegel der Flüssigkeit in dem Verdampferhohlraum. Entsprechend wird der Pegel oder Füllstand der Flüssigkeit in dem Verdampferhohlraum durch den Pegel oder Füllstand in dem Tank bestimmt. Dies kann z.B. so umgesetzt sein, dass der Flüssigkeitseinlass des Verdampfers bodenseitig an dem Verdampferhohlraum angeordnet ist und über einen tieferliegenden Flüssigkeitskanal mit einer bodenseitigen Öffnung des Tanks fluidisch verbunden ist.

Es ist eine Weiterbildung, dass der Tank nutzerseitig mit Flüssigkeit füllbar ist. Dazu kann der Tank entnehmbar ausgebildet sein. Alternativ ist der Tank fest in einem Haushaltsgerät verbaut. Der fest verbaute Tank kann nutzerseitig füllbar sein, z.B. schwerkraftgetrieben über eine Schlauchleitung und/oder eine Einfüllschale. Er kann aber auch automatisch füllbar sein, z.B. durch Öffnen einer Ventils zu einem Frischwasseranschluss, usw.

Die Flüssigkeit ist in einer Weiterbildung eine wasserbasierte Flüssigkeit, z.B. (reines) Wasser, ein Gemisch aus Wasser und Aromastoffen, ein Gemisch aus Wasser und Reinigungs- und/oder Entkalkungsmittel, usw.

Das mindestens eine Heizelement kann bodenseitig und/oder seitlich an dem Verdampferhohlraum, z.B. umlaufend um den Verdampferhohlraum, angeordnet sein. Der Verdampfer kann vom Typ eines Boilers oder eines Durchlauferhitzers bzw. Heizrohrs sein. Das mindestens eine Heizelement kann sich in dem Verdampferhohlraum oder außerhalb des Verdampferhohlraums befinden. Es kann ein elektrisches Widerstandsheizelement sein. Besonders vorteilhaft ist eine Nutzung eines Verdampfers mit rohrförmigem Verdampferhohlraum, wobei das mindestens eine Heizelement eine Seitenwand oder Mantelfläche des Verdampferhohlraums umgibt. Der rohrförmige Verdampferhohlraum ist vorteilhafterweise zumindest ungefähr vertikal ausgerichtet.

Durch das Verdampfen der in dem Verdampferhohlraum befindlichen Flüssigkeit wird ein Gemisch aus reinem Dampf und mitgerissenen Flüssigkeitströpfchen erzeugt, so dass der aus der Dampfaustrittsöffnung ausgelassene Dampf nachteiligerweise auch die Flüssigkeitströpfchen enthält.

Es ist eine Weiterbildung, dass der Flüssigkeitseinlass an einem Boden bzw. bodenseitig an dem Verdampferhohlraum angeordnet ist und/oder die Dampfaustrittsöffnung an einer Decke des Verdampfers angeordnet ist.

Aus der Dampfaustrittsöffnung austretender tröpfchenbehafteter Dampf gelangt folgend durch die Dampfeinlassöffnung des Abscheiders in den Abscheiderhohlraum.

Die in dem Abscheider gesammelte und in den Verdampferhohlraum abfließende Flüssigkeit besteht aus den in dem Dampf mitgenommenen Tröpfchen, die sich an den Wänden des Abscheiders absetzen, als auch aus an den Wänden des Abscheiders erzeugtem Kondensat.

Es ist eine Ausgestaltung, dass sich die Dampfeinlassöffnung des Abscheiders an einem tiefsten Punkt des Abscheiderhohlraums befindet. Dadurch wird der Vorteil erreicht, dass sich in dem Abscheider sammelnde Flüssigkeit weitgehend vollständig zurück in den Verdampfer fließen kann. Der Boden des Abscheiderhohlraums fällt dabei vorteilhafterweise zu dem tiefsten Punkt hin ab. Die Dampfeinlassöffnung kann beispielsweise an einem tiefsten Punkt eines schrägen, insbesondere kiel- oder trichterförmigen, Bodens des Abscheiderhohlraums angeordnet sein. Insbesondere befindet sich die Dampfeinlassöffnung des Abscheiders an einer höheren Position als die Dampfaustrittsöffnung des Verdampfers, so dass die Flüssigkeit alleine durch Schwerkraft zurück in den Verdampfer fließen kann.

Es ist eine Weiterbildung, dass die beiden Hohlräume praktisch unmittelbar nebeneinander angeordnet sind, wodurch sich vorteilhafterweise eine besonders kompakte Anordnung ergibt. Insbesondere kann die Dampfaustrittsöffnung dann der Dampfeinlassöffnung des Abscheiders entsprechen.

Es ist eine Ausgestaltung, dass zwischen der Dampfaustrittsöffnung und der Dampfeinlassöffnung des Abscheiders ein Kanal angeordnet ist. Der Abscheiderhohlraum ist dabei von dem Verdampferhohlraum durch den Kanal, der eine endliche Länge aufweist, beabstandet. So wird der Vorteil erreicht, dass einige Wassertröpfchen, nämlich insbesondere schwere und langsame Wassertröpfchen, bereits in dem Kanal zurückgehalten werden und gar nicht erst in den Abscheider gelangen. Der Kanal ist insbesondere so breit, dass die Flüssigkeit an seinem Rand herunterfließen kann und in seiner Mitte der Dampf aufsteigen kann. Der Kanal ist eine dampfoffener Kanal in dem Sinne, dass der Dampf durch ihn von der Dampfaustrittsöffnung zur Dampfeinlassöffnung hochsteigen kann, insbesondere praktisch ungehindert.

Es ist eine Ausgestaltung, dass der Kanal zumindest abschnittsweise als ein Schlauch ausgebildet ist. So lässt sich vorteilhafterweise der Abscheider zuverlässig an den Verdampfer anschließen und relativ dazu flexibel anordnen. Es ist eine Weiterbildung, wenn an die Dampfaustrittsöffnung des Verdampfers und/oder an die Dampfeinlassöffnung des Abscheiders ein Stutzen ansetzt, da der Schlauch einfach über den Stutzen gezogen und daran befestigt werden kann. Der Kanal wird dann endseitig durch diese Stutzen und mittig durch den Schlauch gebildet. Jedoch kann der Verdampfer auch direkt an den Abscheider angeschlossen werden, beispielsweise durch Ineinanderstecken und Fixieren entsprechend ausgebildeter Stutzen oder dadurch, dass ein Stutzen des Verdampfers oder des Abscheiders in die Dampfeinlassöffnung des Abscheiders bzw. in die Dampfaustrittsöffnung des Verdampfers eingesteckt wird, usw.

Es ist eine Ausgestaltung, dass sich zwischen der Dampfaustrittsöffnung und der Dampfeinlassöffnung eine Tröpfchenrückhaltestruktur befindet. So wird der Vorteil erreicht, dass ein Eintritt - insbesondere größerer - Tröpfchen in den Abscheider noch effektiver verhindert werden kann. Dadurch wiederum kann die Länge des Kanals besonders kurz gehalten werden, was eine kompakte Bauweise unterstützt. Die Tröpfchenrückhaltestruktur kann sich im Bereich der Dampfaustrittsöffnung, der Dampfeinlassöffnung des Abscheiders und/oder, falls sich dazwischen ein Kanal befindet, in dem Kanal befinden.

Es ist eine Weiterbildung das sich eine Tröpfchenrückhaltestruktur zumindest teilweise in einem von der Dampfaustrittsöffnung abgehenden Stutzen und/oder in einem von der Dampfeinlassöffnung abgehenden Stutzen befindet.

Es ist eine Ausgestaltung, dass die Tröpfchenrückhaltestruktur mindestens eine querliegende bzw. quer in dem Kanal angeordnete Strebe aufweist. Die Verwendung einer strebe bzw. eines Balkens ergibt den Vorteil, dass sich dadurch Tröpfchen effektiv zurückhalten lassen und gleichzeitig ein großer Strömungsquerschnitt für die Tröpfchenrückhaltestruktur passierenden Dampf aufrechterhalten wird.

Es ist eine Ausgestaltung, dass die mindestens eine querliegende Strebe mindestens ein kreuzförmig angeordnetes Strebenpaar umfasst, wodurch vorteilhafterweise Tröpfchen ganz besonders effektiv zurückgehalten werden können. Es ist eine dazu besonders vorteilhafte Ausgestaltung, wenn sich in dem Kanal zwischen der Dampfaustrittsöffnung und der Dampfeinlassöffnung des Abscheiders hintereinander mehrere zu einander verdreht angeordnete kreuzförmige Strebenpaar befinden. Beispielsweise können zwei kreuzförmige angeordnete Strebenpaare oder Verstrebungen in Bezug auf eine Strömungsrichtung des Dampfs hintereinander in dem Kanal angeordnet sein und zueinander um 45° verdreht sein.

Es ist eine zur effektiven Abscheidung von Wassertröpfchen besonders vorteilhafte Weiterbildung, wenn sich die Tröpfchenrückhaltestruktur bis in den Abscheiderhohlraum erstreckt, insbesondere über eine gesamte Höhe des Abscheiderhohlraums.

Es ist eine Ausgestaltung, dass sich in dem Abscheiderhohlraum zwischen der Dampfeinlassöffnung und der Dampfauslassöffnung mindestens eine Prallwand befindet. Die Verwendung einer Prallwand ergibt den Vorteil, dass dadurch Flüssigkeitströpfchen noch effektiver von dem Dampf trennbar sind und sich zudem eine Strömungsgeschwindigkeit des Dampfs gezielt verringern lässt. Die Prallwand verdeckt oder blockiert einen Teil des Strömungsquerschnitts für den Dampf zwischen der Dampfeinlassöffnung und der Dampfauslassöffnung in dem Abscheiderhohlraum. Jedoch verbleibt in dem durch die Prallwand eingenommenen Strömungsquerschnitt oder Strömungsfläche mindestens eine Durchlassöffnung, durch die der Dampf zu der Dampfauslassöffnung gelangen kann. Die Durchlassöffnung kann beispielsweise in der Prallwand selbst angeordnet sein und/oder kann sich in einem Bereich zwischen der Prallwand und einer Wandung des Abscheiderhohlraums befinden.

Es ist eine Ausgestaltung, dass sich in dem Abscheiderhohlraum mehrere Prallwände befinden, was eine Effektivität der Abscheidung von Flüssigkeitströpfchen aus dem Dampf weiter erhöht. Dazu können die Prallwände in Strömungsrichtung des Dampfs insbesondere hintereinander angeordnet sein.

Es ist eine Ausgestaltung, dass sich in dem Abscheiderhohlraum mehrere Prallwände befinden, deren zugeordnete Durchlassöffnungen zueinander versetzt angeordnet sind (und also nicht in gerader Linie hintereinander in Strömungsrichtung des Dampfs angeordnet sind). Dadurch wird der Vorteil erreicht, dass der Dampf in den Abscheiderhohlraum umgelenkt wird, was eine Abscheidungseffektivität für Flüssigkeitströpfchen noch weiter steigert und zudem eine Strömungsgeschwindigkeit des Dampfs besonders effektiv verringern kann.

Beispielsweise können Durchlassöffnungen von in Strömungsrichtung des Dampfs hintereinander angeordneten Prallwänden so angeordnet sein, dass der Dampf abwechselnd unter und über die Prallwände oder links und rechts an den Prallwänden vorbei strömen muss.

Es ist eine zur möglichst vollständigen Rückführung der sich im Abscheider sammelnden Flüssigkeit vorteilhafte Ausgestaltung, wenn an der Prallwand mindestens ein Durchbruch vorhanden ist, der so ausgestaltet ist, dass er ein Zurückfließen der Flüssigkeit zu der Dampfeinlassöffnung des Abscheiders erlauben. Dies kann dadurch umgesetzt sein, dass im Bereich jeder Prallwand ein bodenseitiger Durchbruch oder Durchlassöffnung vorhanden ist. Beispielsweise kann dazu die Prallwand nicht ganz bis zum Boden des Abscheiderhohlraums reichen, oder es ist im bodenseitigen Randbereich der Prallwand mindestens ein entsprechender Durchbruch vorhanden.

Es ist eine Ausgestaltung, dass die Dampfeinlassöffnung und die Dampfauslassöffnung des Abscheiders zueinander versetzt angeordnet sind. So wird vorteilhafterweise eine Abscheidung von Flüssigkeitströpfchen und eine Verringerung der Dampfgeschwindigkeit noch weiter verbessert. Beispielsweise kann die Dampfauslassöffnung gegenüber der Dampfeinlassöffnung seitlich versetzt sein. Zusätzlich oder alternativ kann die Dampfauslassöffnung an einer Seitenwand des Abscheiders angeordnet sein, insbesondere angewinkelt zu der Dampfeinlassöffnung.

Die Aufgabe wird auch gelöst durch ein Haushaltsgerät, insbesondere Haushalts-Gargerät, mit einem Verdampfersystem wie oben beschrieben. Bei dem Haushalts-Gargerät ist der Abscheider insbesondere über seine Dampfauslassöffnung mit einem Behandlungsraum des Haushalts-Gargeräts verbunden. Speziell kann das Haushalts-Gargerät ein Backofen sein. Das Haushaltsgerät kann analog zu dem Verdampfersystem ausgebildet sein und ergibt die gleichen Vorteile.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt eine Skizze eines ein Verdampfungssystem aufweisenden Haushaltsgeräts;
- Fig.2: zeigt als Schnittdarstellung in Seitenansicht einen Abscheider des Verdampfungssystems aus Fig.1; und
- Fig.3: zeigt als Schnittdarstellung in Draufsicht den Abscheider des Verdampfungssystems aus Fig.1.

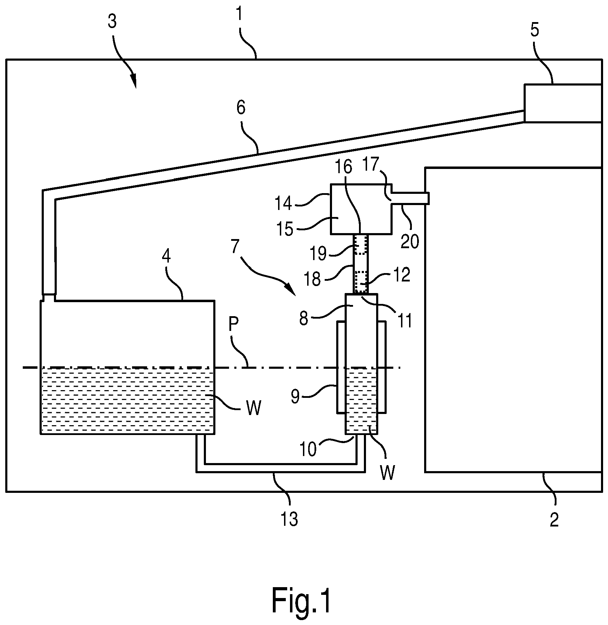

**Fig.1** zeigt eine Skizze eines Haushaltsgeräts in Form eines Backofens 1, der einen Speisenbehandlungsraum in Form eines beheizbaren Garraums 2 aufweist. Der Backofen 1 umfasst ferner eine Dampfbehandlungsfunktionalität und weist dazu ein Verdampfersystem 3 auf.

Das Verdampfersystem 3 weist einen fest verbauten Tank 4 zur Bevorratung von Flüssigkeit, wie z.B. Wasser W, auf. Der Tank 4 ist hier nutzerseitig füllbar, indem ein Nutzer Wasser W in eine Einfüllschale 5 o.ä. eingibt und das Wasser W von dort aus schwerkraftgetrieben über eine Zulaufleitung 6 in den Tank 4 fließt.

Der Backofen 1 weist außerdem einen Verdampfer 7 mit einem mit dem Wasser W befüllbaren Verdampferhohlraum 8, einem Heizelement 9 zum Verdampfen des in dem Verdampferhohlraum 8 befindlichen Wassers W, einem Flüssigkeitseinlass 10 zum Einlassen des zu verdampfenden Wassers W aus dem Tank 4 in den Verdampferhohlraum 8 und einer Dampfaustrittsöffnung 11 zum Auslassen von Dampf aus dem Verdampferhohlraum 8 auf. Der Verdampferhohlraum 8 ist rohrförmig ausgestaltet, wobei das Heizelement 9 um seine seitliche Außenwand herum angeordnet ist. Der Verdampferhohlraum 8 ist hier senkrecht stehend angeordnet, kann aber allgemein auch schrägstehend ausgerichtet sein, z.B. mit einer Neigung zur Vertikalen von bis zu 45°. Der Flüssigkeitseinlass 10 befindet sich an einer unteren oder bodenseitigen Stirnfläche des Verdampferhohlraums 8, während sich die Dampfaustrittsöffnung 11 einer oberen oder deckenseitigen Stirnfläche des Verdampferhohlraums 8 befindet. An die Dampfaustrittsöffnung 11 schließt sich ein nach oben vorstehender Stutzen 12 an.

Der Flüssigkeitseinlass 10 des Verdampfers 7 ist mit dem Tank 4, der sich auf Höhe des Verdampfers 7 befindet, nach Art kommunizierender Röhren verbunden. Ein Pegel P des Wassers W in dem Tank 4 entspricht dem Pegel P des Wassers W in dem Verdampferhohlraum 8. Entsprechend wird der Pegel P in dem Verdampferhohlraum 8 durch den Pegel P in dem Tank 4 bestimmt. Dies ist hier so umgesetzt, dass der Flüssigkeitseinlass 10 über einen tieferliegenden Flüssigkeitskanal 13 mit einer bodenseitigen Öffnung des Tanks 4 fluidisch verbunden ist.

Oberhalb des Verdampfers 7 ist ein (Flüssigkeits- oder Tröpfchen-) Abscheider 14 mit einem Abscheiderhohlraum 15, einer mit der Dampfaustrittsöffnung 11 verbundenen Dampfeinlassöffnung 16 und einer Dampfauslassöffnung 17 zum Auslassen von Dampf vorhanden. Die Dampfeinlassöffnung 16 ist oberhalb der Dampfaustrittsöffnung 11 angeordnet und mit dieser über einen Schlauch 18 verbunden. Der Schlauch 18 ist einerseits auf den Stutzen 12 und andererseits auf einen von der Dampfeinlassöffnung 16 nach außen vorstehenden Stutzen 19 aufgesteckt. Folglich ist zwischen der Dampfaustrittsöffnung 11 und der Dampfeinlassöffnung 16 ein Kanal angeordnet, der die Stutzen 12 und 19 sowie den Schlauch 18 umfasst.

Die Dampfauslassöffnung 17 ist über einen Dampfkanal 20 mit dem Garraum 2 verbunden.

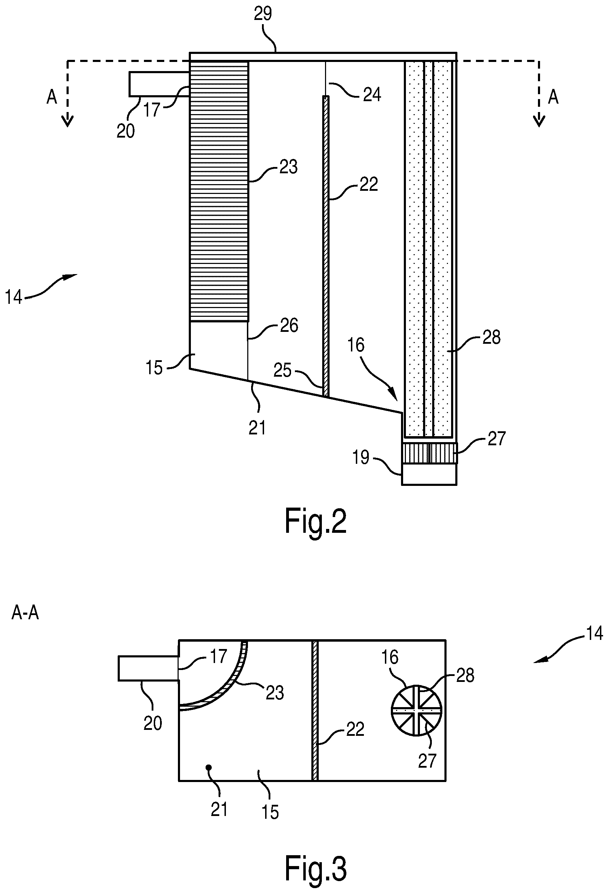

**Fig.2** zeigt den Abscheider 14 als Schnittdarstellung in Seitenansicht. Dieser ist so geformt und angeordnet, dass darin befindliches Wasser W durch seine Dampfeinlassöffnung 16 und weiter durch den Kanal 19, 18, 12 und die Dampfaustrittsöffnung 11 des Verdampfers 7 in den Verdampferhohlraum 8 abfließen kann. Fig.3 zeigt den Abscheider 14 als Schnittdarstellung in Draufsicht auf die in Fig.2 eingezeichnete Schnittebene A-A.

Der Boden 21 des Abscheiderhohlraums 15 ist trichterförmig ausgebildet, wobei sich die Dampfeinlassöffnung 16 an dem tiefsten Punkt des Abscheiderhohlraums 15 befindet. Daher fließt auf dem Boden 21 befindliches Wasser W zu der Dampfeinlassöffnung 16.

In dem Abscheiderhohlraum 15 befinden sich zwischen der Dampfeinlassöffnung 16 und der Dampfauslassöffnung 17 eine erste, vertikal stehende ebene Prallwand 22 und in Strömungsrichtung des Dampfs dahinter eine vertikal stehende, um die Dampfauslassöffnung 17 gekrümmte zweite Prallwand 23. Die erste Prallwand 22 belässt zwischen ihrem oberen Rand und der Decke des Abscheiderhohlraums 15 eine erste Durchlassöffnung 24. An ihrem an den Boden 21 grenzenden unteren Rand weist die erste Prallwand 22 mindestens einen Durchbruch 25 zum Durchlass von Wasser W zu der Dampfeinlassöffnung 16 auf. Die zweite Prallwand 23 belässt zwischen ihrem unteren Rand und dem Boden 21 eine zweite Durchlassöffnung 26. Die Durchlassöffnungen 24 und 26 sind somit zueinander versetzt angeordnet. Die zweite Prallwand 23 schließt zudem seitlich einen Bereich um die Dampfauslassöffnung 17 ab.

Zusätzlich sind die Dampfeinlassöffnung 16 und die Dampfauslassöffnung 17 zueinander versetzt angeordnet (d.h. hier, dass deren Flächennormalen nicht übereinstimmen), nämlich die Dampfeinlassöffnung 16 an dem Boden 21 in vertikaler Ausrichtung und die Dampfauslassöffnung 17 dazu seitlich versetzt an einer Seitenwand des Abscheiderhohlraums 15 in horizontaler Ausrichtung.

Darüber hinaus befindet sich zwischen der Dampfaustrittsöffnung 11 des Verdampfers 7 und der Dampfeinlassöffnung 16 eine Tröpfchenrückhaltestruktur 27, 28. Und zwar umfasst die Tröpfchenrückhaltestruktur 27, 28 hier ein in den Stutzen 19 eingesetzte erstes kreuzförmiges Strebenpaar 27 und ein darüber angeordnetes, teilweise ebenfalls in dem Stutzen 19 eingesetztes zweites kreuzförmiges Strebenpaar 28. Die Strebenpaare 27 und 28 sind um ihre vertikale Längsachse um 45° gegeneinander verdreht, so dass sie in Draufsicht den Stutzen 19 achteln. Hier ist das zweite Strebenpaar 28 als ein länglicher Profilkörper ausgebildet, der sich bis zu der Decke des Abscheiderhohlraums 15 erstreckt, was eine Abscheidung von Tröpfchen aus dem eingeführten Dampf weiter verbessert. Zur einfachen Montage und Reinigung des Abscheiders 14 ist die Decke des Abscheiderhohlraum 15 optional als ein abnehmbarer Deckel 29 ausgebildet, an dem die zweite Prallwand 23 und das zweite Strebenpaar 27 befestigt sind.

Das Verdampfersystem 3 weist den Vorteil auf, dass Ankochzeiten bei gleichzeitig guter Reichweite verringert werden. Mit dem Dampf mitgerissene Wassertröpfchen werden effektiv abgeschieden, so dass praktisch nur gasförmiger Dampf den Garraum erreicht, was ein Garergebnis verbessert. Darüber hinaus ermöglicht das Verdampfersystem 3 kleine Bauraumabmessungen. Außerdem werden für einen zufriedenstellenden Betrieb keine Befüllpumpe, Füllstandserkennung und Leistungssteuerung des Verdampfers benötigt, was Kosten spart und eine Fehleranfälligkeit verringert. Insbesondere ist die erzeugte Dampfrate praktisch unabhängig von der eingefüllten Wassermenge bzw. dem Pegel im Tank, was wiederum die Ankochzeit positiv beeinflusst. Ein Nachfüllen von Wasser während des Betriebs verändert die aktuelle Dampfrate ebenfalls nicht.

Selbstverständlich ist die vorliegende Erfindung nicht auf das gezeigte Ausführungsbeispiel beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

### Bezugszeichenliste

- 1: Backofen
- 2: Garraum
- 3: Verdampfersystem
- 4: Tank
- 5: Einfüllschale
- 6: Zulaufleitung
- 7: Verdampfer
- 8: Verdampferhohlraum
- 9: Heizelement
- 10: Flüssigkeitseinlass
- 11: Dampfaustrittsöffnung
- 12: Stutzen
- 13: Flüssigkeitskanal
- 14: Abscheider
- 15: Abscheiderhohlraum
- 16: Dampfeinlassöffnung
- 17: Dampfauslassöffnung
- 18: Schlauch
- 19: Stutzen
- 20: Dampfkanal
- 21: Boden des Abscheiderhohlraums
- 22: Erste Prallwand
- 23: Zweite Prallwand
- 24: Erste Durchlassöffnung
- 25: Durchbruch
- 26: Zweite Durchlassöffnung
- 27: Erstes Strebenpaar
- 28: Zweites Strebenpaar
- 29: Deckel
- P: Pegel
- W: Wasser

## Patentansprüche

1. Verdampfersystem (3) für ein Haushaltsgerät (1), aufweisend
- einen Tank (4) zur Bevorratung von Flüssigkeit (W),
- einen Verdampfer (7) mit einem mit der Flüssigkeit (W) befüllbaren Verdampferhohlraum (8), mindestens einem Heizelement (9) zum Verdampfen von in dem Verdampferhohlraum (8) befindlicher Flüssigkeit (W), einem Flüssigkeitseinlass (10) zum Einführen der zu verdampfenden Flüssigkeit (W) aus dem Tank (4) in den Verdampferhohlraum (8) und einer Dampfaustrittsöffnung (11) zum Auslassen von Dampf aus dem Verdampferhohlraum (8) und
- einen oberhalb des Verdampfers (7) angeordneten Abscheider (14) mit einem Abscheiderhohlraum (15), einer mit der Dampfaustrittsöffnung (11) des Verdampfers (7) verbundenen Dampfeinlassöffnung (16) und einer Dampfauslassöffnung (17) zum Auslassen von Dampf aus dem Abscheiderhohlraum (15),
wobei
- der Abscheider (14) so geformt und angeordnet ist, dass darin befindliche Flüssigkeit (W) durch seine Dampfeinlassöffnung (16) und durch die Dampfaustrittsöffnung (11) des Verdampfers (7) in den Verdampferhohlraum (8) abfließt.

2. Verdampfersystem (3) nach Anspruch 1, wobei sich die Dampfeinlassöffnung (16) an einem tiefsten Punkt eines dorthin abfallenden Bodens (21) des Abscheiderhohlraums (15) befindet.

3. Verdampfersystem (3) nach einem der vorhergehenden Ansprüche, wobei zwischen der Dampfaustrittsöffnung (11) des Verdampfers (7) und der Dampfeinlassöffnung (16) des Abscheiders (14) ein Kanal (12, 18, 19) angeordnet ist.

4. Verdampfersystem (3) nach Anspruch 3, wobei der Kanal (12, 18, 19) zumindest abschnittsweise als ein Schlauch (18) ausgebildet ist.

5. Verdampfersystem (3) nach einem der vorhergehenden Ansprüche, wobei sich zwischen der Dampfaustrittsöffnung (11) und der Dampfeinlassöffnung (16) eine Tröpfchenrückhaltestruktur (27, 28) befindet.

6. Verdampfersystem (3) nach Anspruch 5, wobei die Tröpfchenrückhaltestruktur (27, 28) mindestens eine querliegende Strebe aufweist.

7. Verdampfersystem (3) nach Anspruch 6, wobei die mindestens eine querliegende Strebe mindestens ein kreuzförmig angeordnetes Strebenpaar (27, 28) umfasst.

8. Verdampfersystem (3) nach einem der vorhergehenden Ansprüche, wobei sich in dem Abscheiderhohlraum (15) zwischen der Dampfeinlassöffnung (16) und der Dampfauslassöffnung (17) mindestens eine Prallwand (22, 23) befindet.

9. Verdampfersystem (3) nach Anspruch 8, wobei an der Prallwand (22, 23) mindestens ein bodenseitiger Durchbruch (25, 26) vorhanden ist, durch den die Flüssigkeit (W) zu der Dampfeinlassöffnung (16) abfließen kann.

10. Verdampfersystem (3) nach einem der Anspruch 8 bis 9 mit mehreren Prallwänden (22, 23), deren zugeordnete Durchlassöffnungen (24, 26) zueinander versetzt angeordnet sind.

11. Verdampfersystem (3) nach einem der vorhergehenden Ansprüche, wobei die Dampfeinlassöffnung (16) und die Dampfauslassöffnung (17) zueinander versetzt angeordnet sind.

12. Verdampfersystem (3) nach einem der vorhergehenden Ansprüche, wobei der Flüssigkeitseinlass (10) des Verdampfers (7) mit dem Tank (4), der sich auf Höhe des Verdampfers (7) befindet, nach Art kommunizierender Röhren verbunden ist.

13. Haushalts-Gargerät (1) mit einem Verdampfersystem (3) nach einem der vorhergehenden Ansprüche, bei dem der Abscheider (14) über seine Dampfauslassöffnung (17) mit einem Behandlungsraum (2) des Haushalts-Gargeräts (1) verbunden ist.

14. Haushalts-Gargerät (1) nach Anspruch 13, bei dem das Haushalts-Gargerät (1) ein Backofen ist.
